# EUROPÄISCHE PATENTSCHRIFT

(11) **EP 4 201 753 B1**
(45) Veröffentlichungstag und Bekanntmachung des Hinweises auf die Patenterteilung: **10.09.2025**
(21) Anmeldenummer: 22214884.3
(22) Anmeldetag: 20.12.2022
(51) Int. Cl.: B60R 19/48

(54) **AUSSENVERKLEIDUNGSTEIL FÜR EIN KRAFTFAHRZEUG**
EXTERIOR TRIM PART FOR A MOTOR VEHICLE
PIÈCE D'HABILLAGE EXTÉRIEURE POUR UN VÉHICULE AUTOMOBILE

(30) Priorität: 21.12.2021 DE 202021106938 U
(43) Veröffentlichungstag der Anmeldung: 28.06.2023
(73) Patentinhaber: RESRG Automotive SE & Co. KG, 95111 Rehau (DE)
(72) Erfinder: Göschel, Rick, 95183 Feilitzsch (DE); Peller, David, 95163 Weißenstadt (DE); Reichstein, Johann, 95448 Bayreuth (DE)

(56) Entgegenhaltungen:
- EP-A1- 3 623 227
- EP-A2- 3 573 043
- DE-A1- 102016 014 605
- DE-A1- 19 851 491
- DE-A1- 2 452 337

## Beschreibung

Die vorliegende Erfindung betrifft ein Außenverkleidungsteil für ein Kraftfahrzeug, mit
- einem Stoßfänger-Verkleidungselement aufweisend eine Sichtseite und eine der Sichtseite gegenüberliegende Innenseite, und
- einem das Stoßfänger-Verkleidungselement versteifenden Verstärkungselement, das mit der Innenseite des Stoßfänger-Verkleidungselementes verbunden ist, und
- einer Dekorblende, die in dem Stoßfänger-Verkleidungselement oder die über dem Stoßfänger-Verkleidungselement angeordnet ist, wobei die Dekorblende aus einer die Sichtseite der Dekorblende bildenden, partiell durchleuchtbaren Frontblende und einem die Frontblende rückseitig abschließenden Deckelelement besteht, wobei die Frontblende und das Deckelelement zusammen einen Raum einschließen in dem ein Beleuchtungselement aufnehmbar ist.

Ein gattungsgemäßes Außenverkleidungsteil für ein Kraftfahrzeug ist als offenkundige Vorbenutzung in Form des Skoda Enyaq bekannt. Nachteilig an einem derartigen Außenverkleidungsteil ist, dass die Dekorblende ein relativ hohes Gewicht von mehreren Kilogramm aufweist. Zudem ist der Zusammenbau der Dekorblende und der Einbau der Dekorblende in das Stoßfänger-Verkleidungselement oder über dem Stoßfänger-Verkleidungselement sehr zeitaufwendig. Ein vergleichbares Außenverkleidungsteil ist in der DE 10 2016 014 605 A1 offenbart.

Die Erfindung stellt sich daher die Aufgabe ein gattungsgemäßes Außenverkleidungsteil für ein Kraftfahrzeug dahingehend zu verbessern, dass sowohl der Zusammenbau vereinfacht als auch das Gewicht des Außenverkleidungsteils verringert wird.

Diese Aufgabe wird erfindungsgemäß gelöst durch ein Außenverkleidungsteil für ein Kraftfahrzeug mit den Merkmalen des Anspruchs 1, mit
- einem Stoßfänger-Verkleidungselement aufweisend eine Sichtseite und eine der Sichtseite gegenüberliegende Innenseite, und mit
- einem das Stoßfänger-Verkleidungselement versteifenden Verstärkungselement, das mit der Innenseite des Stoßfänger-Verkleidungselementes verbunden ist, und mit
- einer Dekorblende, die in dem Stoßfänger-Verkleidungselement oder die über dem Stoßfänger-Verkleidungselement angeordnet ist, wobei die Dekorblende aus einer die Sichtseite der Dekorblende bildenden, partiell oder vollständig durchleuchtbaren Frontblende und einem die Frontblende rückseitig abschließenden Deckelelement besteht, wobei die Frontblende und das Deckelelement zusammen einen Raum einschließen in dem ein Beleuchtungselement aufnehmbar ist,
wobei das Deckelelement als ein Teil des Verstärkungselements und einstückig mit diesem ausgebildet ist.

Durch die erfindungsgemäße Ausbildung des Außenverkleidungsteils wird ein bis dato separates Deckelelement durch einen Teil des Verstärkungselements ersetzt. Hierdurch wird zum einen das Gewicht dieses nicht mehr benötigten, separaten Deckelelements eingespart und zum anderen entfällt der Montageschritt des Zusammenbaus dieses separaten Deckelelements mit der Frontblende bzw. der Montageschritt des separaten Deckelelements an dem Stoßfänger-Verkleidungselement oder dem Verstärkungselement.

Die Frontblende ist bevorzugt schalenförmig ausgebildet. Hierdurch ergibt sich ein ausreichend großer Raum zur Aufnahme eines Beleuchtungselements.

Die Frontblende ist bevorzugt aus einem transparenten oder transluzenten Polymermaterial ausgebildet. Das transparente oder transluzente Polymermaterial kann insbesondere Polycarbonat, Polymethylmethacrylat, Polystyrol (beispielsweise PS, ABS, ASA), thermoplastisches Polyester (beispielsweise PET, PBT) oder ein Bioplymer (beispielsweise Zelluloseacetat, Polyhydroxybutyrat, Polymilchsäure, Polyhydroxyalkaonat) umfassen.

Die Dekorblende und das Stoßfänger-Verkleidungselement sind bevorzugt länglich ausgebildet und die Länge der Dekorblende ist hierbei wenigstens ein Viertel, insbesondere wenigstens ein Drittel der Länge des Stoßfänger-Verkleidungselements.

Das Verstärkungselement weist mehrere Verstärkungsrippen und/oder Versteifungssicken auf.

Die Frontblende und das Deckelelement sind stoffschlüssig miteinander verbunden . Eine stoffschlüssige Verbindung kann hierbei insbesondere eine Klebeverbindung oder eine Schweißverbindung sein.

Um eine nachträgliche Wartung oder einen Wechsel eines in dem Raum aufgenommenen Beleuchtungselement zu erleichtern ist alternativ die Frontblende und das Deckelelement lösbar miteinander verbunden. Für diesen Fall ist als eine bevorzugte Ausführungsform zwischen den Randbereichen der Frontblende und des Deckelelements eine Dichtung oder ein Dichtmittel vorgesehen.

Das Stoßfänger-Verkleidungselement kann bevorzugt aus einem Polymermaterial bestehen, insbesondere aus einem Polymermaterial, das Polypropylen (PP) oder Polypropylen + Ethylen-Propylen-Dien-Kautschuk (PP-EPDM) umfasst.

Das Verstärkungselement kann bevorzugt aus einem weiteren Polymermaterial bestehen, wobei das weitere Polymermaterial insbesondere ein Polycarbonat (PC), Acrylester-Styrol-Acrylnitril (ASA), Acrylnitril-Butadien-Styrol (ABS) oder Kombinationen der vorgenannten Polymermaterialien umfasst.

Sowohl das Stoßfänger-Verkleidungselement als auch das Verstärkungselement können bevorzugt mittels eines Spritzgussverfahrens oder eines generativen Fertigungsverfahrens hergestellt sein.

Ferner Teil der Erfindung ist ein System aus einem Außenverkleidungsteil wie vorstehend beschrieben und einem in dem Raum aufgenommenen Beleuchtungselement.

Hierbei ist in einer bevorzugten Ausführungsform das Beleuchtungselement mit dem Verstärkungselement verbunden und von diesem in Position gehalten ist. Die Verbindung kann insbesondere formschlüssig realisiert sein.

### Ausführungsbeispiele

Im Folgenden wird die Erfindung anhand lediglich Ausführungsbeispiele darstellender Zeichnung erläutert. Es zeigen schematisch:
- Fig. 1: eine Frontalansicht eines Außenverkleidungsteils;
- Fig. 2: eine Frontalansicht des Außenverkleidungsteils mit aktiviertem Beleuchtungselement hinter der Frontblende;
- Fig. 3: eine Querschnittsdarstellung durch ein Außenverkleidungsteil des Stands der Technik;
- Fig. 4: eine Querschnittsdarstellung durch ein erfindungsgemäßes Außenverkleidungsteil.

In den Figuren werden gleiche oder funktionsgleiche Elemente mit den gleichen Bezugszeichen versehen.

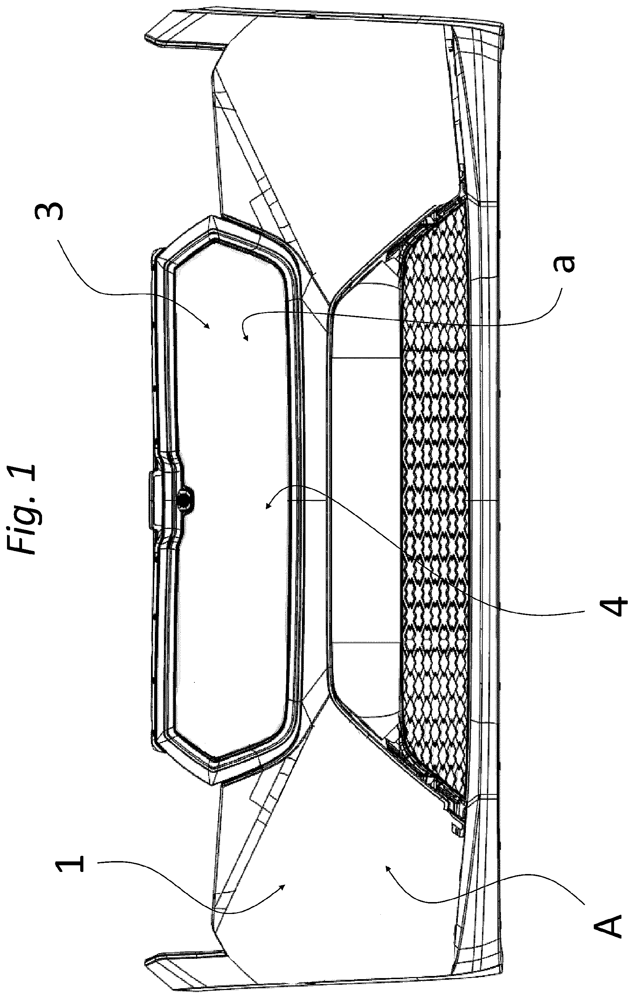

Die Fig. 1 zeigt eine Frontalansicht eines gattungsgemäßen Außenverkleidungsteils für ein Kraftfahrzeug mit einem Stoßfänger-Verkleidungselement 1 aufweisend eine Sichtseite A und eine der Sichtseite A gegenüberliegende Innenseite B. Das Außenverkleidungsteil umfasst ferner ein das Stoßfänger-Verkleidungselement 1 versteifenden Verstärkungselement 2, das mit der Innenseite B des Stoßfänger-Verkleidungselementes 1 verbunden ist. Die Verbindung kann bevorzugt mittels eine Vielzahl von Rastverbindungen erfolgen. Ferner umfasst das Außenverkleidungsteil eine Dekorblende 3, die über dem Stoßfänger-Verkleidungselement 1 angeordnet ist.

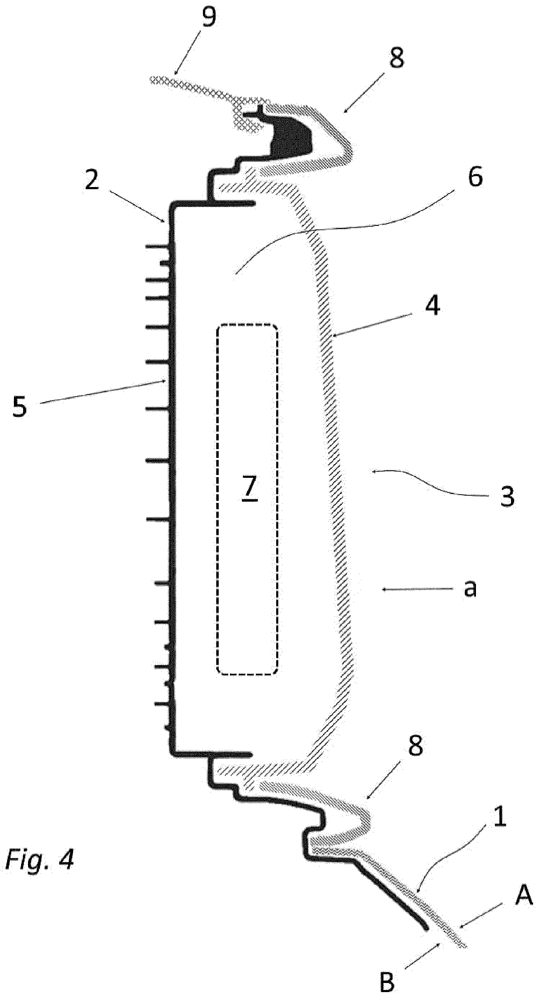

Die Dekorblende 3 besteht aus einer die Sichtseite a der Dekorblende 3 bildenden, partiell durchleuchtbaren Frontblende 4 und einem die Frontblende 4 rückseitig abschließenden Deckelelement 5 besteht. Die Frontblende 4 und das Deckelelement 5 schließen zusammen einen Raum 6 ein in dem ein Beleuchtungselement 7 aufnehmbar ist (vgl. Fig. 4).

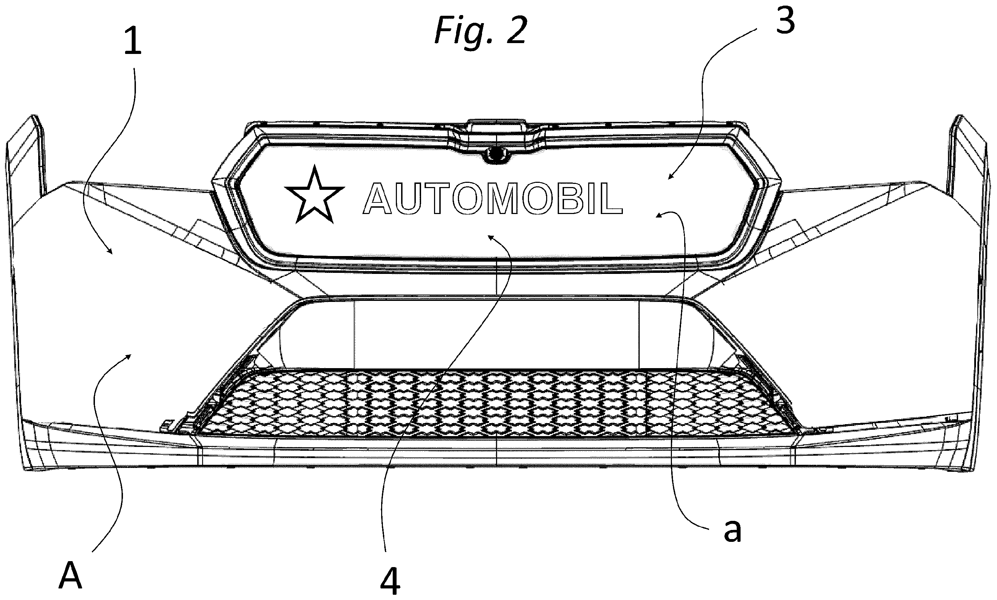

In der Fig. 2 ist eine Frontalansicht eines Systems aus einem Außenverkleidungsteil und einem in dem Raum 6 aufgenommenen Beleuchtungselement 7 dargestellt. Das Beleuchtungselement 7 ist hier aktiviert und aufgrund der partiell durchleuchtbaren Frontblende 4 wird ein Symbol und ein Schriftzug sichtbar, der bei deaktivierten Beleuchtungselement 7 nicht sichtbar ist.

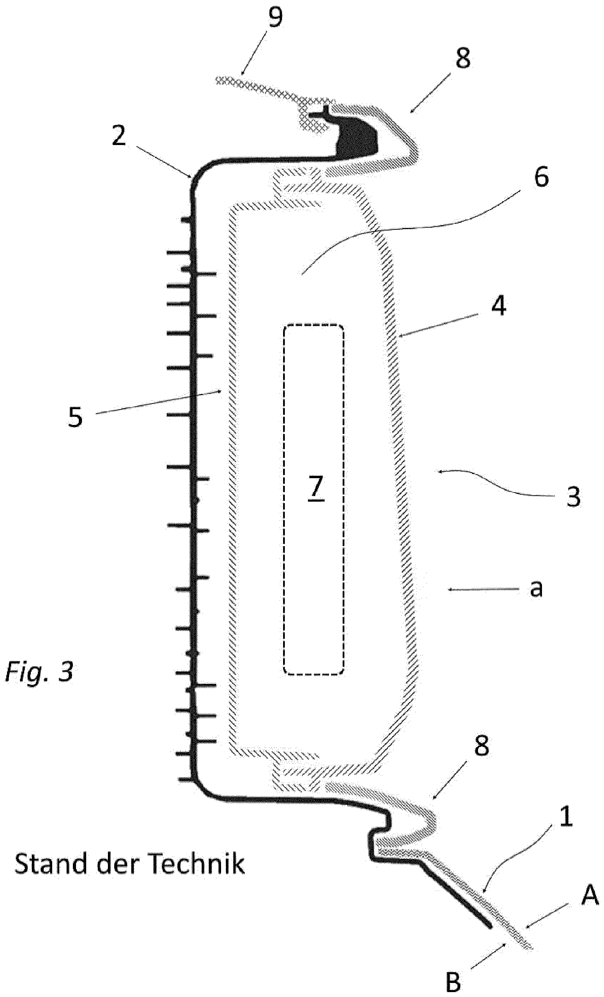

In Fig. 3 ist eine Querschnittsdarstellung eines Außenverkleidungsteils gemäß dem Stand der Technik dargestellt. Die Dekorblende 3, die über dem Stoßfänger-Verkleidungselement 1 angeordnet ist, und aus einer die Sichtseite a der Dekorblende 3 bildenden, partiell oder vollständig durchleuchtbaren Frontblende 4 und einem die Frontblende 4 rückseitig abschließenden Deckelelement 5 besteht, weist ebenfalls einen Raum 6 auf, der von der Frontblende 4 und dem Deckelelement 5 zusammen ein geschlossen wird und in dem ein Beleuchtungselement 7 aufnehmbar ist. Das Deckelelement 5 gemäß dem Stand der Technik ist als ein separates Bauteil ausgebildet. Zusätzlich sind noch Abdeckblenden 8 und ein Trägerteil 9 zur Aufnahme der Motorraumabdeckung erkennbar.

Demgegenüber ist in Fig. 4 in einer Querschnittsdarstellung ein erfindungsgemäßes Außenverkleidungsteil für ein Kraftfahrzeug dargestellt, mit einem Stoßfänger-Verkleidungselement 1 aufweisend eine Sichtseite A und eine der Sichtseite A gegenüberliegende Innenseite B, und mit einem das Stoßfänger-Verkleidungselement 1 versteifenden Verstärkungselement 2, das mit der Innenseite B des Stoßfänger-Verkleidungselementes 1 verbunden ist, und mit einer Dekorblende 3, die über dem Stoßfänger-Verkleidungselement 1 angeordnet ist, wobei die Dekorblende 3 aus einer die Sichtseite a der Dekorblende 3 bildenden, durchleuchtbaren Frontblende 4 und einem die Frontblende 4 rückseitig abschließenden Deckelelement 5 besteht, wobei die Frontblende 4 und das Deckelelement 5 zusammen einen Raum 6 einschließen in dem ein Beleuchtungselement 7 aufnehmbar ist, wobei das Deckelelement 5 als ein Teil des Verstärkungselements 2 und einstückig mit dem Verstärkungselement 2 ausgebildet ist.

Die Frontblende 4 ist schalenförmig ausgebildet. Das Verstärkungselement 2 weist mehrere Verstärkungsrippen auf.

Die Frontblende 4 und das Deckelelement 5 sind stoffschlüssig miteinander verbunden.

Die Frontblende 4 und das Deckelelement 5 könnten alternativ lösbar miteinander verbunden sein. Dann sollte zwischen den Randbereichen der Frontblende 4 und des Deckelelements 5 eine Dichtung oder ein Dichtmittel vorgesehen sein.

Das Stoßfänger-Verkleidungselement 1 kann aus einem Polymermaterial bestehen, insbesondere aus einem Polymermaterial, das Polypropylen (PP) oder Polypropylen + Ethylen-Propylen-Dien-Kautschuk (PP-EPDM) umfasst.

Das Verstärkungselement 2 kann aus einem weiteren Polymermaterial bestehen, wobei das weitere Polymermaterial insbesondere ein Polycarbonat (PC), Acrylester-Styrol-Acrylnitril (ASA), Acrylnitril-Butadien-Styrol (ABS) oder Kombinationen der vorgenannten Polymermaterialien umfasst.

In der Fig. 4 ist zusätzlich ein System aus einem vorstehend beschriebenen Außenverkleidungsteil und einem in dem Raum 6 aufgenommenen Beleuchtungselement 7 dargestellt. Hierbei kann Beleuchtungselement 7 mit dem Verstärkungselement 2 verbunden und von diesem in Position gehalten sein (Details nicht näher dargestellt).

## Patentansprüche

1. Außenverkleidungsteil für ein Kraftfahrzeug, mit
- einem Stoßfänger-Verkleidungselement (1) aufweisend eine Sichtseite (A) und eine der Sichtseite (A) gegenüberliegende Innenseite (B), und
- einem das Stoßfänger-Verkleidungselement (1) versteifenden Verstärkungselement (2), das mit der Innenseite (B) des Stoßfänger-Verkleidungselementes (1) verbunden ist, und
- einer Dekorblende (3), die in dem Stoßfänger-Verkleidungselement (1) oder die über dem Stoßfänger-Verkleidungselement (1) angeordnet ist, wobei die Dekorblende (3) aus einer die Sichtseite (a) der Dekorblende (3) bildenden, partiell oder vollständig durchleuchtbaren Frontblende (4) und einem die Frontblende (4) rückseitig abschließenden Deckelelement (5) besteht, wobei die Frontblende (4) und das Deckelelement (5) zusammen einen Raum (6) einschließen in dem ein Beleuchtungselement (7) aufnehmbar ist,
**dadurch gekennzeichnet, dass**
das Deckelelement (5) als ein Teil des Verstärkungselements (2) und einstückig mit diesem ausgebildet ist, wobei das Verstärkungselement (2) mehrere Verstärkungsrippen und/oder Versteifungssicken aufweist und, wobei die Frontblende (4) und das Deckelelement (5) stoffschlüssig oder lösbar miteinander verbunden sind.

2. Außenverkleidungsteil nach Anspruch 1, **dadurch gekennzeichnet, dass** die Frontblende (4) schalenförmig ausgebildet ist.

3. Außenverkleidungsteil nach Anspruch 1 oder 2, **dadurch gekennzeichnet, dass** die Frontblende (4) und das Deckelelement (5) lösbar miteinander verbunden sind und zwischen den Randbereichen der Frontblende (4) und des Deckelelements (5) eine Dichtung oder ein Dichtmittel vorgesehen ist.

4. Außenverkleidungsteil nach einem der vorstehenden Ansprüche, **dadurch gekennzeichnet, dass** das Stoßfänger-Verkleidungselement (1) aus einem Polymermaterial besteht, insbesondere aus einem Polymermaterial, das Polypropylen (PP) oder Polypropylen + Ethylen-Propylen-Dien-Kautschuk (PP-EPDM) umfasst.

5. Außenverkleidungsteil nach einem der vorstehenden Ansprüche, **dadurch gekennzeichnet, dass** das Verstärkungselement (2) aus einem weiteren Polymermaterial besteht, wobei das weitere Polymermaterial insbesondere ein Polycarbonat (PC), Acrylester-Styrol-Acrylnitril (ASA), Acrylnitril-Butadien-Styrol (ABS) oder Kombinationen der vorgenannten Polymermaterialien umfasst.

6. System aus einem Außenverkleidungsteil nach einem der vorstehenden Ansprüche und einem in dem Raum (6) aufgenommenen Beleuchtungselement (7).

7. System nach Anspruch 6, **dadurch gekennzeichnet, dass** das Beleuchtungselement (7) mit dem Verstärkungselement (2) verbunden und von diesem in Position gehalten ist.

## Claims

1. Exterior panelling part for a motor vehicle, having
- a bumper panelling element (1) having a visible side (A) and an inner side (B) opposite the visible side (A), and
- a reinforcing element (2) stiffening the bumper panelling element (1), which reinforcing element is connected to the inner side (B) of the bumper panelling element (1), and
- a decorative panel (3) that is arranged in the bumper panelling element (1) or is arranged above the bumper panelling element (1), wherein the decorative panel (3) consists of a partially or completely translucent front panel (4) forming the visible side (a) of the decorative panel (3) and a cover element (5) closing off the front panel (4) on the rear side, wherein the front panel (4) and the cover element (5) together enclose a space (6) in which a lighting element (7) can be accommodated,
**characterised in that**
the cover element (5) is formed as a part of the reinforcing element (2) and in one piece with the latter, wherein the reinforcing element (2) has a plurality of reinforcing ribs and/or stiffening beads and wherein the front bumper (4) and the cover element (5) are connected to each other in a materially bonded or detachable manner.

2. Exterior panelling part according to claim 1, **characterised in that** the front panel (4) is shell-shaped.

3. Exterior panelling part according to claim 1 or 2, **characterised in that** the front panel (4) and the cover element (5) are detachably connected to one another and a seal or a sealant is provided between the edge areas of the front panel (4) and the cover element (5).

4. Exterior panelling part according to any one of the preceding claims, **characterised in that** the bumper panelling element (1) consists of a polymer material, in particular a polymer material that comprises polypropylene (PP) or polypropylene + ethylene propylene diene monomer rubber (PP-EPDM).

5. Exterior panelling part according to the preceding claim, **characterised in that** the reinforcing element (2) consists of a further polymer material, wherein the further polymer material in particular comprises a polycarbonate (PC), acrylonitrile styrene acrylate (ASA), acrylonitrile butadiene styrene (ABS) or combinations of the aforementioned polymer materials.

6. System consisting of an exterior panelling part according to any one of the preceding claims and a lighting element (7) accommodated in the space (6).

7. System according to claim 6, **characterised in that** the lighting element (7) is connected to the reinforcing element (2) and held in position by the latter.

## Revendications

1. Partie d'habillage extérieur pour un véhicule automobile, avec
- un élément d'habillage de pare-chocs (1) présentant un côté visible (A) et un côté intérieur (B) opposé au côté visible (A), et
- un élément de renforcement (2) qui renforce l'élément d'habillage de pare-chocs (1), qui est relié au côté intérieur (B) de l'élément d'habillage de pare-chocs (1), et
- un panneau décoratif (3) qui est agencé dans l'élément d'habillage de pare-chocs (1) ou qui est agencé au-dessus de l'élément d'habillage de pare-chocs (1), le panneau décoratif (3) étant constitué d'un panneau frontal (4) formant le côté visible (a) du panneau décoratif (3), partiellement ou complètement translucide et d'un élément de couvercle (5) fermant le panneau frontal (4) sur le côté arrière, le panneau frontal (4) et l'élément de couvercle (5) enfermant ensemble un espace (6) dans lequel peut être reçu un élément d'éclairage (7),
**caractérisée en ce que**
l'élément de couvercle (5) est réalisé en tant que partie de l'élément de renforcement (2) et d'un seul tenant avec celui-ci, l'élément de renforcement (2) présentant plusieurs nervures de renforcement et/ou moulures de renforcement et, le panneau frontal (4) et l'élément de couvercle (5) étant reliés entre eux par liaison de matière ou de manière amovible.

2. Partie d'habillage extérieur selon la revendication 1, **caractérisée en ce que** le panneau frontal (4) est réalisé en forme de coque.

3. Partie d'habillage extérieur selon la revendication 1 ou 2, **caractérisée en ce que** le panneau frontal (4) et l'élément de couvercle (5) sont reliés l'un à l'autre de manière amovible et un joint ou un moyen d'étanchéité est prévu entre les zones de bord du panneau frontal (4) et de l'élément de couvercle (5).

4. Partie d'habillage extérieur selon l'une quelconque des revendications précédentes, **caractérisée en ce que** l'élément d'habillage de pare-chocs (1) est constitué d'un matériau polymère, notamment d'un matériau polymère comprenant du polypropylène (PP) ou du polypropylène + caoutchouc d'éthylène-propylène-diène (PP-EPDM).

5. Partie d'habillage extérieur selon l'une quelconque des revendications précédentes, **caractérisée en ce que** l'élément de renforcement (2) est constitué d'un autre matériau polymère, l'autre matériau polymère comprenant notamment un polycarbonate (PC), un ester acrylique-styrène-acrylonitrile (ASA), un acrylonitrile-butadiène-styrène (ABS) ou des combinaisons des matériaux polymères précités.

6. Système composé d'une partie d'habillage extérieur selon l'une quelconque des revendications précédentes et d'un élément d'éclairage (7) reçu dans l'espace (6).

7. Système selon la revendication 6, **caractérisé en ce que** l'élément d'éclairage (7) est relié à l'élément de renforcement (2) et est maintenu en position par celui-ci.
